# EUROPEAN PATENT APPLICATION

(11) **EP 3 382 223 A1**
(43) Date of publication of application: **03.10.2018**
(21) Application number: 16868672.3
(22) Date of filing: 25.11.2016
(51) Int. Cl.: F16C 32/06, B05B 5/04, F01D 15/06, F01D 25/16, F16C 32/00, F16C 32/04, F16C 39/06, B05B 3/10

(54) **SPINDLE DEVICE**

(30) Priority: 25.11.2015 JP 2015229995; 25.11.2015 JP 2015229996; 25.11.2015 JP 2015229997
(71) Applicant: NSK Ltd., Tokyo 141-8560 (JP)
(72) Inventor: KOBAYASHI, Naoya, Fujisawa-shi Kanagawa 251-8501 (JP); TAKAHASHI, Atsushi, Fujisawa-shi Kanagawa 251-8501 (JP)
(74) Representative: Grünecker Patent- und Rechtsanwälte PartG mbB
(86) International application number: PCT/JP2016/084975
(87) International publication number: WO 2017/090729

(57) **Abstract**

A spindle device (10) includes a rotating shaft (12) having a plurality of turbine blades (11) provided in a circumferential direction, a housing configured to accommodate therein the rotating shaft (12), and a gas bearing (40) mounted to the housing (20) and configured to float and support the rotating shaft (12) to the housing (20) in a contactless manner by supply of a gas. The rotating shaft (12) is configured to be rotatively driven by jetting gas to the plurality of turbine blades (11). The plurality of turbine blades (11) overlaps the gas bearing (40) in an axial direction. Therefore, there is provided the spindle device having a flat configuration in which an axial length is short and capable of implementing miniaturization and weight saving.

## Description

### TECHNICAL FIELD

The present invention relates to a spindle device, and more particularly, to a spindle device that can be favorably used for an electrostatic coater.

### RELATED ART

In the related art, a spindle device that is used for an electrostatic coater has been known, as shown in FIG. 11 (for example, refer to Patent Document 1). The spindle device 100 includes a rotating shaft 103 having a bell cup 101 mounted to one axial end portion and a plurality of turbine blades 102 provided at the other axial end portion, a housing 104 in which the rotating shaft 103 is inserted, and a device case 105 configured to accommodate therein the housing 104. The spindle device 100 is configured to jet a gas to the plurality of turbine blades 102, thereby rotating the rotating shaft 103. Also, most of the electrostatic coaters are used with being mounted to a multi-jointed robot.

Also, the rotating shaft 103 is supported to be rotatable in a radial direction by a gas bearing 106 mounted to the housing 104. Also, the rotating shaft 103 is supported in a thrust direction in a state where a magnetic force of attracting a flange part 108 by a magnet 107 mounted to the housing 104 and a reactive force upon the jetting of the gas to the flange part 108 by the gas bearing 106 are balanced.

### Citation List

### Patent Documents

Patent Document 1: JP-A-2006-77797

### SUMMARY OF THE INVENTION

### Problems To Be Solved By the Invention

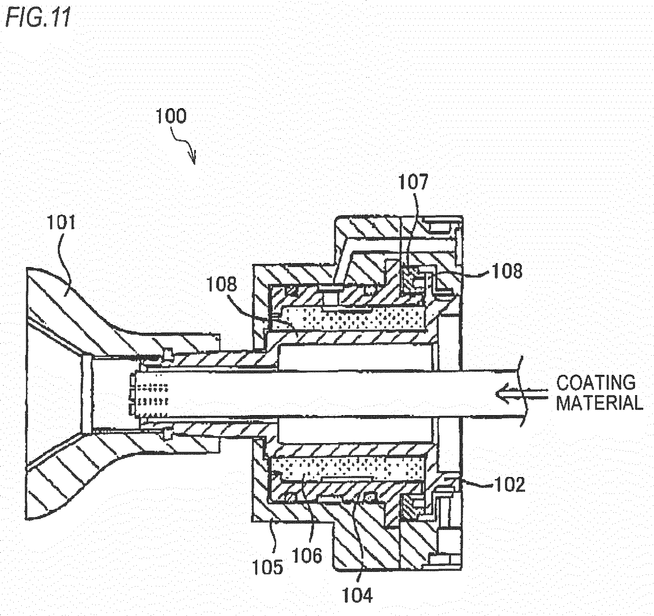

In the spindle device 100 as shown in FIG. 11, the turbine blades 102 and the gas bearing 106 are arranged with being axially spaced, so that an axially long configuration is made. For this reason, a weight increases as a whole, a moment load to be applied to the gas bearing 106 as a result of rotation of the turbine blades 102 is high, and a supply path of the gas is long, so that additional improvements are required.

Also, in the spindle device 100 as shown in FIG. 11, the one axial end portion of the rotating shaft 103, to which the bell cup 101 is mounted, extends long in the axial direction from the flange part 108. For this reason, when the rotating shaft 103 rotates at high speed, whirling of the rotating shaft 103 increases and a resonance frequency of the rotating shaft 103 is low, so that countermeasures against critical speed are required.

The present invention has been made in view of the above situations, and a first object thereof is to provide a spindle device having a flat configuration in which an axial length is short and capable of implementing miniaturization and weight saving. Also, a second object is to provide a spindle device capable of suppressing whirling of a rotating shaft and increasing a resonance frequency of the rotating shaft.

### Means for Solving the Problems

The above objects of the present invention are achieved by following configurations.
(1) A spindle device including:
   a rotating shaft having a plurality of turbine blades provided in a circumferential direction,
   a housing configured to accommodate therein the rotating shaft, and
   a gas bearing mounted to the housing and configured to float and support the rotating shaft to the housing in a contactless manner through supply of a gas,
   wherein the rotating shaft is configured to be rotatively driven by jetting gas to the plurality of turbine blades, and
   wherein the plurality of turbine blades overlaps the gas bearing in an axial direction.
(2) The spindle device of the above (1), further including a magnet configured to axially attract a flange part provided to the rotating shaft,
   wherein the gas bearing is configured to jet the gas toward a peripheral surface of the rotating shaft facing the gas bearing and an axial side surface of the flange part, and
   wherein the rotating shaft is supported to the housing in a radial direction and in a thrust direction by the magnet and the gas bearing.
(3) The spindle device of the above (1), wherein the plurality of turbine blades is arranged at a radially outer side with respect to the gas bearing.
(4) The spindle device of the above (3), further including a magnet configured to axially attract a flange part provided to the rotating shaft,
   wherein the gas bearing is configured to jet the gas toward an inner peripheral surface of the rotating shaft and an axial side surface of the flange part, and
   wherein the rotating shaft is supported to the housing in a radial direction and in a thrust direction by the magnet and the gas bearing.
(5) The spindle device of the above (1), wherein the plurality of turbine blades is arranged at a radially inner side with respect to the gas bearing.
(6) The spindle device of the above (5), further including a magnet configured to axially attract a flange part provided to the rotating shaft,
   wherein the gas bearing is configured to jet the gas toward an outer peripheral surface of the rotating shaft and an axial side surface of the flange part, and
   wherein the rotating shaft is supported to the housing in a radial direction and in a thrust direction by the magnet and the gas bearing.
(7) The spindle device of one of the above (1) to (6), wherein the gas bearing is supplied with the gas at a plurality of axial positions.
(8) A spindle device including:
   a rotating shaft having a plurality of turbine blades provided in a circumferential direction,
   a housing configured to accommodate therein the rotating shaft, and
   a gas bearing mounted to the housing and configured to float and support the rotating shaft to the housing in a contactless manner through supply of a gas,
   wherein the rotating shaft is configured to be rotatively driven by jetting gas to the plurality of turbine blades,
   wherein the rotating shaft has a workpiece mounting part to which a workpiece is to be mounted, and
   wherein the workpiece mounting part overlaps the gas bearing in an axial direction.
(9) The spindle device of the above (8), wherein the rotating shaft has a large-diameter cylindrical part at which the plurality of turbine blades is formed, a small-diameter cylindrical part configuring the workpiece mounting part, and a flange part extending in a radial direction with coupling the large-diameter cylindrical part and the small-diameter cylindrical part each other, and
   wherein the large-diameter cylindrical part and the small-diameter cylindrical part extend in one axial direction with respect to the flange part, respectively.
(10) The spindle device of the above (9), wherein the workpiece mounting part has a tapered surface and a mounting screw formed on an inner peripheral surface of the small-diameter cylindrical part.
(11) The spindle device of one of the above (8) to (10), wherein the plurality of turbine blades is arranged at a radially outer side with respect to the gas bearing and overlaps the gas bearing in the axial direction.
(12) The spindle device of the above (11), further including a magnet configured to axially attract a flange part provided to the rotating shaft,
   wherein the gas bearing is configured to jet the gas toward an inner peripheral surface of the rotating shaft and an axial side surface of the flange part, and
   wherein the rotating shaft is supported to the housing in the radial direction and in a thrust direction by the magnet and the gas bearing.
(13) The spindle device of one of the above (8) to (10), wherein the plurality of turbine blades is arranged at a radially inner side with respect to the gas bearing and overlaps the gas bearing in the axial direction.
(14) The spindle device of the above (13), further including a magnet configured to axially attract a flange part provided to the rotating shaft,
   wherein the gas bearing is configured to jet the gas toward an outer peripheral surface of the rotating shaft and an axial side surface of the flange part, and
   wherein the rotating shaft is supported to the housing in the radial direction and in a thrust direction by the magnet and the gas bearing.
(15) The spindle device of one of the above (8) to (14), wherein the gas bearing is supplied with the gas at a plurality of axial positions.

### Effects of the Invention

According to the spindle device of the present invention, the plurality of turbine blades overlaps the gas bearing in the axial direction. Accordingly, it is possible to flatten the spindle device, and to implement coating in a narrow space by miniaturization and miniaturization of a robot by weight saving. Also, according to the above configuration, it is possible to reduce a moment load to be applied to the gas bearing as a result of rotation of the turbine blades, as compared to a configuration where the plurality of turbine blades and the gas bearing are axially spaced. Also, a supply path of the gas is shortened, so that a piping resistance is reduced and a pressure loss can be thus suppressed.

Also, according to the spindle device of the present invention, the workpiece mounting part overlaps the gas bearing in the axial direction, so that it is possible to shorten an axial length of the rotating shaft. Thereby, it is possible to reduce whirling of the rotating shaft and to increase a resonance frequency of the rotating shaft.

### BRIEF DESCRIPTION OF THE DRAWINGS

FIG. 1 is a sectional view of a spindle device in accordance with a first embodiment of the present invention.
FIG. 2 is a schematic sectional view of a housing and a rotating shaft for illustrating turbine blades and nozzles.
FIG. 3 is a sectional view of a spindle device in accordance with a second embodiment of the present invention.
FIG. 4 is a sectional view of a spindle device in accordance with a third embodiment of the present invention.
FIG. 5 is a schematic sectional view of the housing and the rotating shaft for illustrating the turbine blades and nozzles.
FIG. 6 is a sectional view of a spindle device in accordance with a fourth embodiment of the present invention.
FIG. 7 is a sectional view of a spindle device in accordance with the first embodiment of the present invention.
FIG. 8 is a schematic sectional view of the housing and the rotating shaft for illustrating the turbine blades and nozzles of FIG. 7.
FIG. 9 is a sectional view of a spindle device in accordance with the second embodiment of the present invention.
FIG. 10 is a schematic sectional view of the housing and the rotating shaft for illustrating the turbine blades and nozzles of FIG. 9.
FIG. 11 is a sectional view of a spindle device of the related art.

### DETAILED DESCRIPTION OF EMBODIMENTS

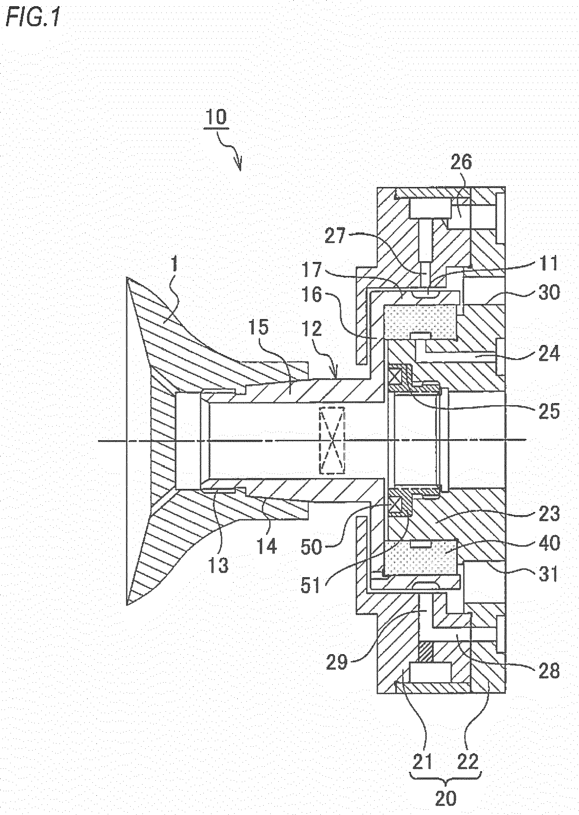

Hereinafter, each embodiment of a spindle device of the present invention will be described in detail with reference to the drawings. Meanwhile, in below descriptions, a left side of FIG. 1 is referred to as a front side, and a right side is referred to as a rear side.

### (First embodiment)

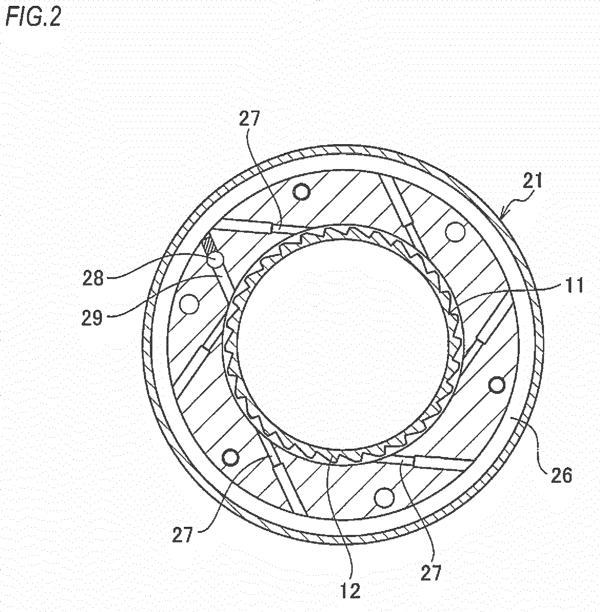

As shown in FIGS. 1 and 2, a spindle device 10 of a first embodiment is a spindle device of an air turbine drive type that is to be used for an electrostatic coater. The spindle device 10 includes a rotating shaft 12 having a plurality of turbine blades 11 provided in a circumferential direction, a housing 20 configured to accommodate therein the rotating shaft 12, and a radial bearing and a thrust bearing configured by a gas bearing 40 and a magnet 50 and configured to support the rotating shaft 12 to the housing 20 in a radial direction and in a thrust direction.

The rotating shaft 12 has a mounting screw 13 and a tapered surface 14 on an outer peripheral surface. The rotating shaft 12 has a workpiece mounting part 15 to which a bell cup I, which is a coating jig for nebulizing and spraying a coating material, is mounted. The rotating shaft 12 has a flange part 16 extending radially outward from a base end portion of the workpiece mounting part 15. The rotating shaft 12 has a cylindrical part 17 extending axially from an outer diameter part of the flange part 16. The rotating shaft 12 is formed to have a hollow shape.

The plurality of turbine blades 11 is formed by processing an outer peripheral surface of the cylindrical part 17.

The housing 20 has a front housing 21 and a rear housing 22. The front housing 21 is formed to have a hollow shape with covering a front surface of the flange part 16 of the rotating shaft 12 and an outer peripheral surface of the cylindrical part 17. The rear housing 22 is also formed to have a hollow shape and is fastened and fixed to a rear end face of the front housing 21 by bolts (not shown). Also, the rear housing 22 has an axially extending part 23 extending toward a rear surface of the flange part 16 inside the cylindrical part 17 of the rotating shaft 12. The rear housing 22 is formed to have a substantially L-shaped section.

The gas bearing 40 is a cylindrical porous member, and is mounted to an outer peripheral surface of the axially extending part 23 of the rear housing 22. The gas bearing 40 is configured to jet a compressed air toward an inner peripheral surface of the cylindrical part 17 of the rotating shaft 12 and to float and support the rotating shaft 12 to the housing 20 in a contactless manner, through supply of a gas from a bearing air supply path 24 formed in the rear housing 22. Thereby, the rotating shaft 12 is supported to the housing 20 in a radial direction by the gas bearing 40.

Also, the gas bearing 40 has an axial front end face facing the rear surface of the flange part 16 of the rotating shaft 12, and is configured to jet the compressed air toward the rear surface of the flange part 16.

The magnet 50 is supported by a magnet yoke 51, and the magnet yoke 51 is screwed and mounted to a magnet mounting part 25 formed at an inner side of the axially extending part 23 of the rear housing 22. In this state, the magnet 50 closely faces the rear surface of the flange part 16.

Therefore, the flange part 16 is attracted rearward by a magnetic force of the magnet 50. In the meantime, the gas bearing 40 is configured to generate a reactive force by jetting the compressed air toward the rear surface (an axial side surface) of the flange part 16. Therefore, the rotating shaft 12 is supported to the housing 20 in a thrust direction by the attractive force of the magnet 50 and the reactive force of the gas bearing 40.

The front housing 21 and the rear housing 22 are formed with a turbine air supply path 26 for supplying a compressed air for operation to the turbine blades 11, and the front housing 21 is formed with a plurality of (in the first embodiment, six equally spaced in the circumferential direction) normal rotation nozzles 27 (refer to FIG. 2) configured to communicate with the turbine air supply path 26 and extending linearly with being inclined in one circumferential direction with respect to the radial direction.

Also, the front housing 21 and the rear housing 22 are formed with a turbine air supply path 28 for supplying a compressed air for brake to the turbine blades 11, and the front housing 21 is formed with a reverse rotation nozzle 29 configured to communicate with the other turbine air supply path 28 and extending linearly with being inclined in the other circumferential direction with respect to the radial direction.

In the meantime, the rear housing 22 is formed with a turbine air exhaust hole 30 for discharging a turbine air and a detection hole 31 for inserting therein a rotation sensor, which holes are penetrated in the axial direction.

Therefore, according to the spindle device 10 configured as described above, in a state where the gas is supplied to the gas bearing 40 and the rotating shaft 12 is thus rotatably supported to the housing 20, the gas is jetted from the plurality of normal rotation nozzles 27 toward the plurality of turbine blades 11, so that the kinetic energy of the jetted stream is converted into a rotating drive force of the rotating shaft 12 and the rotating shaft 12 is thus rotatively driven.

Here, the spindle device 10 of the first embodiment is configured so that the plurality of turbine blades 11 overlaps the gas bearing 40 in the axial direction. Thereby, it is possible to flatten the spindle device 10, and to implement coating in a narrow space by miniaturization and miniaturization of a robot by weight saving. Also, according to the above configuration, it is possible to reduce a moment load to be applied to the gas bearing 40 as a result of the rotation of the turbine blades 11, as compared to a configuration where the plurality of turbine blades 11 and the gas bearing 40 are axially spaced. Also, the bearing air supply path 24 and the turbine air supply paths 26, 28 are shortened, so that a piping resistance is reduced and a pressure loss in the paths can be thus suppressed.

Also, since the plurality of turbine blades 11 is arranged at the radially outer side with respect to the gas bearing 40, it is possible to enlarge a turbine outer diameter, so that turbine torque increases and coating speed can be thus increased.

Also, the above-described configuration is adopted, so that the bearing air supply path 24 jets the air toward the radially outer side and the normal rotation nozzles 27 and the reverse rotation nozzle 29, which are the turbine nozzles, jet the air toward the radially inner side. Therefore, the bearing air supply path 24 passes a more radially inner side than the turbine air exhaust hole 30 and opens to a rear end face of the rear housing 22, and the turbine air supply paths 26, 28 pass a radially outer side of the turbine air exhaust hole 30 and open to the rear end face of the rear housing 22, so that a degree of freedom of a layout of the paths 24, 26, 28 increases.

Also, the magnet 50 configured to axially attract the flange part 16 of the rotating shaft 12 is further provided. The gas bearing 40 is configured to jet the gas toward an inner peripheral surface of the rotating shaft 12, which is a peripheral surface of the rotating shaft 12 facing the gas bearing 40, and the axial side surface of the flange part 16. The rotating shaft 12 is supported to the housing 20 in the radial direction and in the thrust direction by the gas bearing 40 and the magnet 50. Therefore, the rotating shaft 12 can be supported to the housing 20 in a compact manner.

### (Second Embodiment)

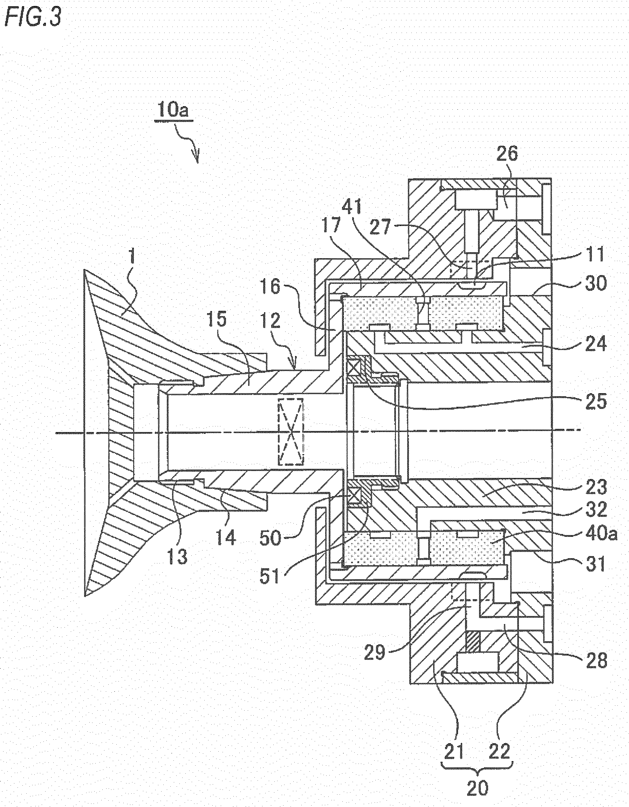

Subsequently, a spindle device 10a of a second embodiment of the present invention is described with reference to FIG. 3.

In the spindle device 10a of the second embodiment, a gas bearing 40a is configured to have a longer axial dimension than the gas bearing 40 of the first embodiment. Also, the gas bearing 40a is supplied with the gas from openings of the bearing air supply path 24 branched into two paths at two axial positions, is formed with an exhaust hole 41 penetrating radially at an axially intermediate part thereof, and is configured to communicate with a bearing air discharge path 32 formed in the rear housing 22 to discharge the gas to an outside.

Thereby, according to the spindle device 10a of the second embodiment, the gas bearing 40a supplies the gas at the plurality of axial positions, and it is possible to increase an axial dimension of the gas bearing 40a. Accordingly, although the spindle device 10a has the longer axial dimension as a whole, as compared to the spindle device of the first embodiment, it is possible to increase the moment rigidity of the spindle device 10a.

The other configurations and operations are the same as the first embodiment.

### (Third Embodiment)

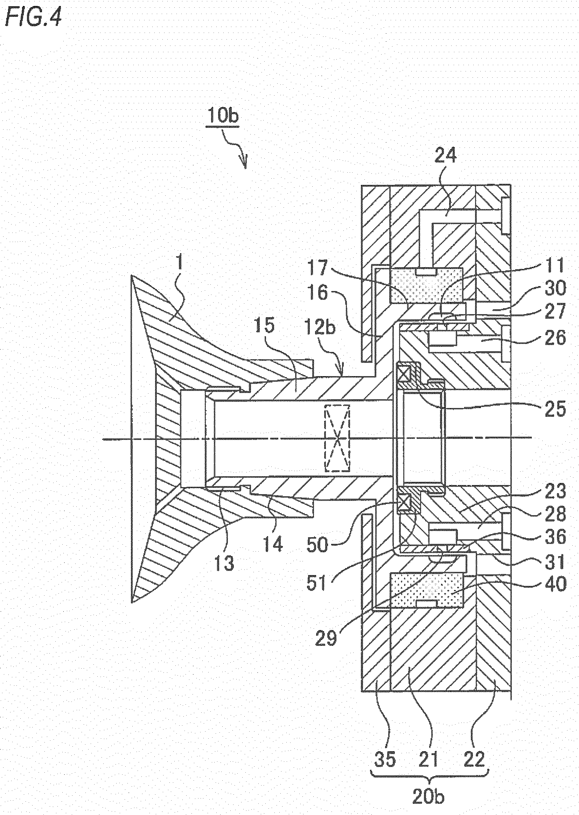

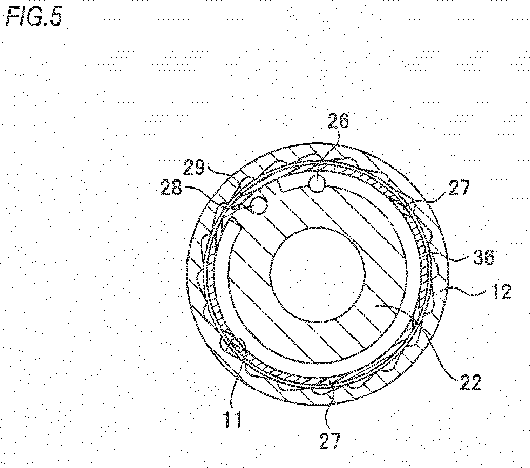

As shown in FIGS. 4 and 5, a spindle device 10b of a third embodiment is a spindle device of an air turbine drive type that is to be used for an electrostatic coater. The spindle device 10b includes a rotating shaft 12b having a plurality of turbine blades 11 provided in a circumferential direction, a housing 20b configured to accommodate therein the rotating shaft 12b, and a radial bearing and a thrust bearing configured by a gas bearing 40 and a magnet 50 and configured to support the rotating shaft 12b to the housing 20b in the radial direction and in the thrust direction.

The rotating shaft 12b has a mounting screw 13 and a tapered surface 14 on an outer peripheral surface thereof, includes a workpiece mounting part 15 to which a bell cup 1, which is a coating jig for nebulizing and spraying a coating material, is mounted, a flange part 16 extending radially outward from a base end portion of the workpiece mounting part 15, and a cylindrical part 17 extending axially from a radially intermediate part of the flange part 16, and is formed to have a hollow shape.

The plurality of turbine blades 11 is formed by processing an inner peripheral surface of the cylindrical part 17.

The housing 20b has a front housing 21, a rear housing 22 and a front cover 35, each of which is formed to have a hollow shape. The front housing 21 is positioned at an outer diameter-side of the cylindrical part 17 of the rotating shaft 12b, and the front cover 35 is formed to closely face a front surface of the flange part 16. The front cover 35, the front housing 21 and the rear housing 22 are fastened and fixed by bolts (not shown). Also, the rear housing 22 has an axially extending part 23 extending toward a rear surface of the flange part 16 inside the cylindrical part 17 of the rotating shaft 12b, and is formed to have a substantially L-shaped section.

The gas bearing 40 is a cylindrical porous member, and is mounted to an inner peripheral surface of the front housing 21. The gas bearing 40 is configured to jet a compressed air toward an outer peripheral surface of the cylindrical part 17 of the rotating shaft 12b and to float and support the rotating shaft 12b to the housing 20b in a contactless manner, through supply of a gas from a bearing air supply path 24 formed in the front housing 21 and the rear housing 22. Thereby, the rotating shaft 12b is supported to the housing 20b in the radial direction by the gas bearing 40.

Also, the gas bearing 40 has an axial front end face facing the rear surface of the flange part 16 of the rotating shaft 12b, and is configured to jet the compressed air toward the rear surface of the flange part 16.

The magnet 50 is kept by a magnet yoke 51, and the magnet yoke 51 is screwed and mounted to a magnet mounting part 25 formed at an inner side of the axially extending part 23 of the rear housing 22. In this state, the magnet 50 closely faces the rear surface of the flange part 16.

Therefore, the flange part 16 is attracted rearward by a magnetic force of the magnet 50. In the meantime, the gas bearing 40 is configured to generate a reactive force by jetting the compressed air toward the rear surface (an axial side surface) of the flange part 16, and the rotating shaft 12b is supported to the housing 20b in the thrust direction by the attractive force of the magnet 50 and the reactive force of the gas bearing 40.

The rear housing 22 is formed with a turbine air supply path 26 for supplying a compressed air for operation to the turbine blades 11 and another turbine air supply path 28 for supplying a compressed air for brake to the turbine blades 11, and a nozzle ring 36 having a plurality of nozzles 27, 29 formed therein is mounted to an outer peripheral surface of the axially extending part 23 of the rear housing 22. As shown in FIG. 5, the nozzle ring 36 is formed with a plurality of (in the third embodiment, six equally spaced in the circumferential direction) normal rotation nozzles 27 configured to communicate with the turbine air supply path 26 and extending linearly with being inclined in one circumferential direction with respect to the radial direction and a reverse rotation nozzle 29 configured to communicate with the other turbine air supply path 28 and extending linearly with being inclined in the other circumferential direction with respect to the radial direction.

In the meantime, the rear housing 22 is formed with a turbine air exhaust hole 30 for discharging a turbine air and a detection hole 31 for inserting therein a rotation sensor, which holes are penetrated in the axial direction.

Therefore, according to the spindle device 10b configured as described above, in a state where the gas is supplied to the gas bearing 40 and the rotating shaft 12b is thus rotatably supported to the housing 20b, the gas is jetted from the plurality of normal rotation nozzles 27 toward the plurality of turbine blades 11, so that the kinetic energy of the jetted stream is converted into a rotating drive force of the rotating shaft 12b and the rotating shaft 12b is thus rotatively driven.

Here, the spindle device 10b of the third embodiment is configured so that the plurality of turbine blades 11 overlaps the gas bearing 40 in the axial direction. Thereby, it is possible to flatten the spindle device 10b, and to implement coating in a narrow space by miniaturization and miniaturization of a robot by weight saving. Also, according to the above configuration, it is possible to reduce a moment load to be applied to the gas bearing 40 as a result of the rotation of the turbine blades 11, as compared to a configuration where the plurality of turbine blades 11 and the gas bearing 40 are axially spaced. Also, the bearing air supply path 24 and the turbine air supply paths 26, 28 are shortened, so that a piping resistance is reduced and a pressure loss in the paths can be thus suppressed.

Also, since the plurality of turbine blades 11 is arranged at the radially inner side with respect to the gas bearing 40, the inertia moment is reduced upon the rotation of the rotating shaft 12b, so that it is possible to reduce the time upon acceleration and deceleration.

Also, the above-described configuration is adopted, so that the bearing air supply path 24 jets the air toward the radially inner side and the normal rotation nozzles 27 and the reverse rotation nozzle 29, which are the turbine nozzles, jet the air toward the radially outer side. Therefore, the bearing air supply path 24 passes a more radially outer side than the turbine air exhaust hole 30 and opens to the rear end face of the rear housing 22, and the turbine air supply paths 26, 28 pass a radially inner side of the turbine air exhaust hole 30 and open to the rear end face of the rear housing 22, so that a degree of freedom of the layout of the paths 24, 26, 28 increases.

Also, since the magnet 50 configured to axially attract the flange part 16 of the rotating shaft 12b is further provided, the gas bearing 40 is configured to jet the gas toward an outer peripheral surface of the rotating shaft 12b, which is a peripheral surface of the rotating shaft 12 facing the gas bearing 40, and the axial side surface of the flange part 16, and the rotating shaft 12b is supported to the housing 20b in the radial direction and in the thrust direction by the gas bearing 40 and the magnet 50, the rotating shaft 12b can be supported to the housing 20b in a compact manner.

### (Fourth Embodiment)

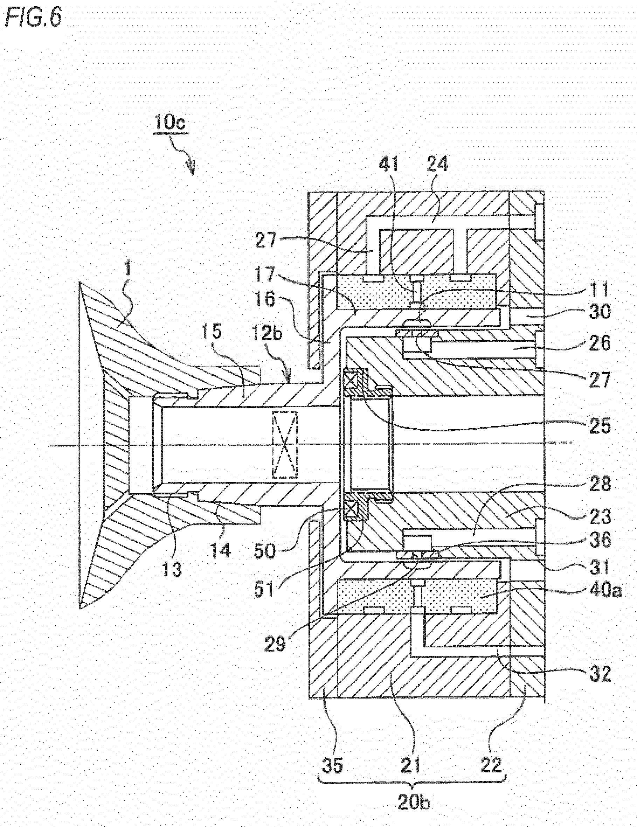

Subsequently, a spindle device 10c of a third embodiment of the present invention is described with reference to FIG. 6.

In the spindle device 10c of the fourth embodiment, a gas bearing 40a is configured to have a longer axial dimension than the gas bearing 40 of the third embodiment. Also, the gas bearing 40a is supplied with the gas from openings of the bearing air supply path 24 branched into two paths at two axial positions, is formed with an exhaust hole 41 penetrating radially at an axially intermediate part thereof, and is configured to communicate with a bearing air discharge path 32 formed in the rear housing 22 to discharge the gas to an outside.

Thereby, according to the spindle device 10c of the fourth embodiment, the gas bearing 40a supplies the gas at the plurality of axial positions, and it is possible to increase an axial dimension of the gas bearing 40a. Accordingly, although the spindle device 10c has the longer axial dimension as a whole, as compared to the spindle device of the first embodiment, it is possible to increase the moment rigidity of the spindle device 10c.

The other configurations and operations are the same as the third embodiment.

### (Fifth Embodiment)

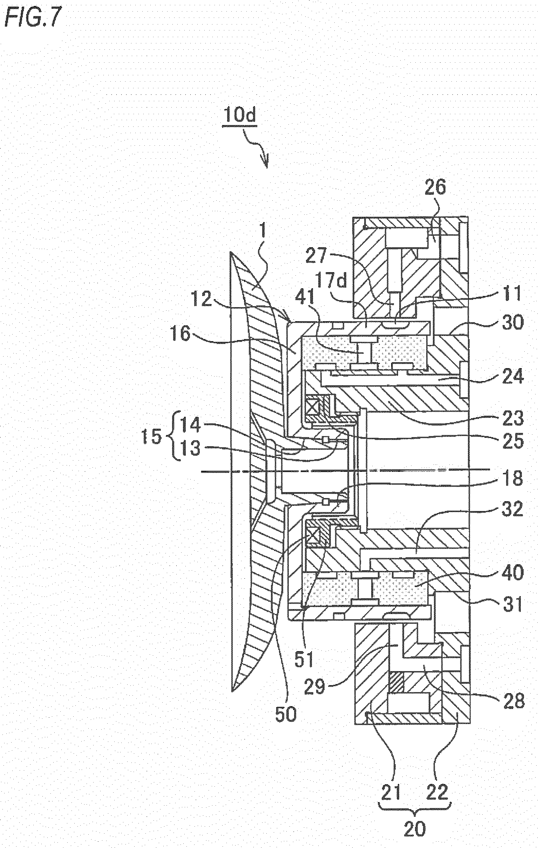

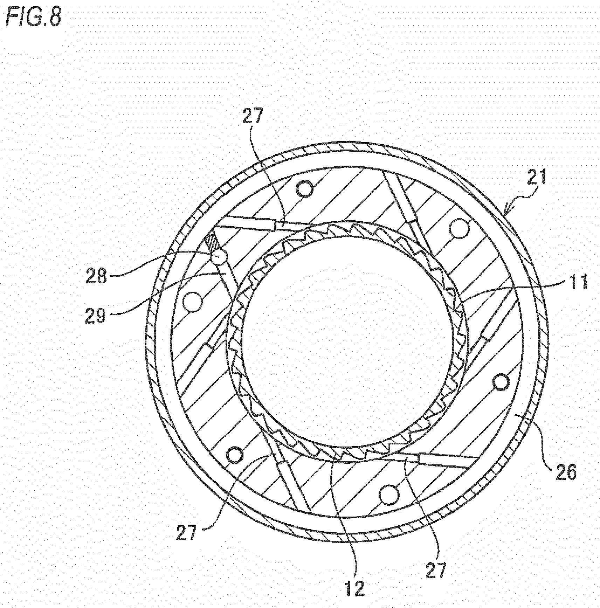

As shown in FIGS. 7 and 8, a spindle device 10d of a fifth embodiment is a spindle device of an air turbine drive type that is to be used for an electrostatic coater. The spindle device 10d includes a rotating shaft 12 having a plurality of turbine blades 11 provided in a circumferential direction, a housing 20 configured to accommodate therein the rotating shaft 12, and a radial bearing and a thrust bearing configured by a gas bearing 40 and a magnet 50 and configured to support the rotating shaft 12 to the housing 20 in the radial direction and in the thrust direction.

The rotating shaft 12 includes a large-diameter cylindrical part 17d having the plurality of turbine blades 11 formed thereto, a small-diameter cylindrical part 18 configuring a workpiece mounting part 15 to which a bell cup (workpiece) 1, which is a coating jig for nebulizing and spraying a coating material, is mounted, and a flange part 16 extending in the radial direction with coupling the large-diameter cylindrical part 17d and the small-diameter cylindrical part 18 each other, and is formed to have a hollow shape.

Also, the large-diameter cylindrical part 17d and the small-diameter cylindrical part 18 extend in one axial direction (rearward) with respect to the flange part 16, and the rotating shaft 12 is formed to have a substantially U-shaped section.

The plurality of turbine blades 11 is formed by processing an outer peripheral surface of the large-diameter cylindrical part 17d.

The small-diameter cylindrical part 18 configuring the workpiece mounting part 15 has a tapered surface 14 and a mounting screw 13 on an inner peripheral surface thereof, which are formed in corresponding order from the front of the small-diameter cylindrical part 18.

The housing 20 has a front housing 21 and a rear housing 22. The front housing 21 is formed to have a hollow shape with covering a front surface of the flange part 16 of the rotating shaft 12 and an outer peripheral surface of the large-diameter cylindrical part 17d. The rear housing 22 is also formed to have a hollow shape and is fastened and fixed to a rear end face of the front housing 21 by bolts (not shown). Also, the rear housing 22 has an axially extending part 23 extending toward a rear surface of the flange part 16 inside the large-diameter cylindrical part 17d of the rotating shaft 12, and is formed to have a substantially L-shaped section.

The gas bearing 40 is a cylindrical porous member, and is mounted to an outer peripheral surface of the axially extending part 23 of the rear housing 22. The gas bearing 40 is configured to jet a compressed air toward an inner peripheral surface of the large-diameter cylindrical part 17d of the rotating shaft 12 and to float and support the rotating shaft 12 to the housing 20 in a contactless manner, through supply of a gas from a bearing air supply path 24 formed in the rear housing 22. Thereby, the rotating shaft 12 is supported to the housing 20 in a radial direction by the gas bearing 40.

Also, the gas bearing 40 has an axial front end face facing the rear surface of the flange part 16 of the rotating shaft 12, and is configured to jet the compressed air toward the rear surface of the flange part 16.

Meanwhile, in the fifth embodiment, the gas bearing 40a is supplied with the gas from openings of the bearing air supply path 24 branched into two paths at two axial positions, is formed with an exhaust hole 41 penetrating radially at an axially intermediate part thereof, and is configured to communicate with a bearing air discharge path 32 formed in the rear housing 22 to discharge the gas to an outside. Thereby, an axial dimension of the gas bearing 40 is lengthened to increase the moment rigidity of the spindle device 10d.

The magnet 50 is kept by a magnet yoke 51, and the magnet yoke 51 is screwed and mounted to a magnet mounting part 25 formed at an inner side of the axially extending part 23 of the rear housing 22. In this state, the magnet 50 closely faces the rear surface of the flange part 16.

Therefore, the flange part 16 is attracted rearward by a magnetic force of the magnet 50. In the meantime, the gas bearing 40 is configured to generate a reactive force by jetting the compressed air toward the rear surface (an axial side surface) of the flange part 16, and the rotating shaft 12 is supported to the housing 20 in a thrust direction by the attractive force of the magnet 50 and the reactive force of the gas bearing 40.

The front housing 21 and the rear housing 22 are formed with a turbine air supply path 26 for supplying a compressed air for operation to the turbine blades 11, and the front housing 21 is formed with a plurality of (in the fifth embodiment, six equally spaced in the circumferential direction) normal rotation nozzles 27 (refer to FIG. 8) configured to communicate with the turbine air supply path 26 and extending linearly with being inclined in one circumferential direction with respect to the radial direction.

Also, the front housing 21 and the rear housing 22 are formed with a turbine air supply path 28 for supplying a compressed air for brake to the turbine blades 11, and the front housing 21 is formed with a reverse rotation nozzle 29 configured to communicate with the other turbine air supply path 28 and extending linearly with being inclined in the other circumferential direction with respect to the radial direction.

In the meantime, the rear housing 22 is formed with a turbine air exhaust hole 30 for discharging a turbine air and a detection hole 31 for inserting therein a rotation sensor, which holes are penetrated in the axial direction.

Therefore, according to the spindle device 10d configured as described above, in a state where the gas is supplied to the gas bearing 40 and the rotating shaft 12 is thus rotatably supported to the housing 20, the gas is jetted from the plurality of normal rotation nozzles 27 toward the plurality of turbine blades 11, so that the kinetic energy of the jetted stream is converted into a rotating drive force of the rotating shaft 12 and the rotating shaft 12 is thus rotatively driven.

Here, in the spindle device 10d of the fifth embodiment, the tapered surface 14 and mounting screw 13 of the workpiece mounting part 15 formed on the inner peripheral surface of the small-diameter cylindrical part 18 overlap the gas bearing 40 in the axial direction, so that it is possible to shorten the axial length of the rotating shaft 12. Thereby, it is possible to reduce the whirling of the rotating shaft 12 and to increase the resonance frequency of the rotating shaft 12.

Therefore, since critical speed of the spindle device 10d exceeds a rotating speed range upon using, it is possible to omit an O-ring that has been provided between the rotating shaft 12 and the housing 20 in the related art.

Also, the spindle device 10d is configured so that the plurality of turbine blades 11 overlaps the gas bearing 40 in the axial direction. Thereby, it is possible to flatten the spindle device 10d, and to implement coating in a narrow space by miniaturization and miniaturization of a robot by weight saving. Also, according to the above configuration, it is possible to reduce a moment load to be applied to the gas bearing 40 as a result of the rotation of the turbine blades 11, as compared to a configuration where the plurality of turbine blades 11 and the gas bearing 40 are axially spaced. Also, the bearing air supply path 24 and the turbine air supply paths 26, 28 are shortened, so that a piping resistance is reduced and a pressure loss in the paths can be thus suppressed.

Also, since the plurality of turbine blades 11 is arranged at the radially outer side with respect to the gas bearing 40, it is possible to enlarge a turbine outer diameter, so that turbine torque increases and coating speed can be thus increased.

Also, the above-described configuration is adopted, so that the bearing air supply path 24 jets the air toward the radially outer side and the normal rotation nozzles 27 and the reverse rotation nozzle 29, which are the turbine nozzles, jet the air toward the radially inner side. Therefore, the bearing air supply path 24 passes a more radially inner side than the turbine air exhaust hole 30 and opens to a rear end face of the rear housing 22, and the turbine air supply paths 26, 28 pass a radially outer side of the turbine air exhaust hole 30 and open to the rear end face of the rear housing 22, so that a degree of freedom of the layout of the paths 24, 26, 28 increases.

Also, since the magnet 50 configured to axially attract the flange part 16 of the rotating shaft 12 is further provided, the gas bearing 40 is configured to jet the gas toward the inner peripheral surface of the rotating shaft 12 and the axial side surface of the flange part 16, and the rotating shaft 12 is supported to the housing 20 in the radial direction and in the thrust direction by the gas bearing 40 and the magnet 50, the rotating shaft 12 can be supported to the housing 20 in a compact manner.

Also, the gas bearing 40 supplies the gas at the plurality of axial positions and the axial dimension of the gas bearing 40 can be lengthened to increase the moment rigidity of the spindle device 10d.

### (Sixth Embodiment)

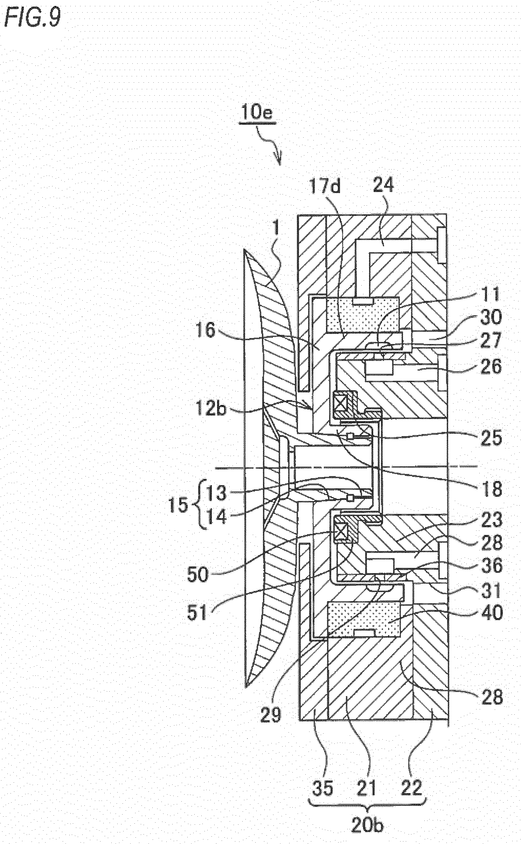

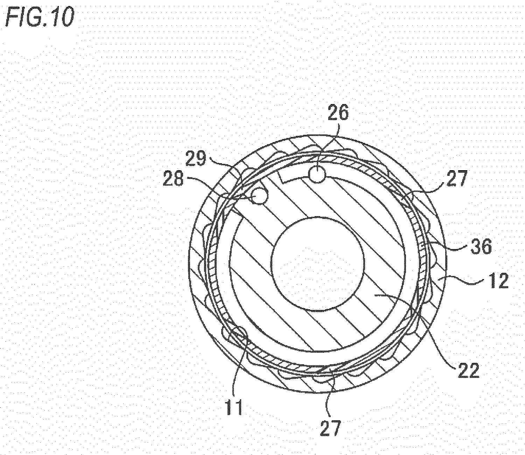

Subsequently, a spindle device 10e of a sixth embodiment is described with reference to FIGS. 9 and 10.

The spindle device 10e of the sixth embodiment is also a spindle device of an air turbine drive type that is to be used for an electrostatic coater. The spindle device 10e is common to the fifth embodiment, in that it also includes a rotating shaft 12b, a housing 20b, and a radial bearing and a thrust bearing configured by a gas bearing 40 and a magnet 50, but is different from the fifth embodiment, in that the plurality of turbine blades 11 is arranged at a radially inner side with respect to the gas bearing 40.

The rotating shaft 12b includes a large-diameter cylindrical part 17d having the plurality of turbine blades 11 formed thereto, a small-diameter cylindrical part 18 configuring a workpiece mounting part 15 to which a bell cup (workpiece) 1, which is a coating jig for nebulizing and spraying a coating material, is mounted, and a flange part 16 extending radially with coupling the large-diameter cylindrical part 17d and the small-diameter cylindrical part 18, and is formed to have a hollow shape.

Also, the large-diameter cylindrical part 17d and the small-diameter cylindrical part 18 extend in one axial direction (rearward) with respect to the flange part 16, respectively. Meanwhile, in the sixth embodiment, the flange part 16 extends more radially outward than the large-diameter cylindrical part 17d.

The plurality of turbine blades 11 is formed by processing an inner peripheral surface of the large-diameter cylindrical part 17d.

The housing 20b has a front housing 21, a rear housing 22 and a front cover 35, each of which is formed to have a hollow shape. The front housing 21 is positioned at an outer diameter-side of the large-diameter cylindrical part 17d of the rotating shaft 12b, and the front cover 35 is formed to closely face a front surface of the flange part 16. The front cover 35, the front housing 21 and the rear housing 22 are fastened and fixed by bolts (not shown). Also, the rear housing 22 has an axially extending part 23 extending toward a rear surface of the flange part 16 inside the large-diameter cylindrical part 17d of the rotating shaft 12b, and is formed to have a substantially L-shaped section.

The gas bearing 40 is a cylindrical porous member, and is mounted to an inner peripheral surface of the front housing 21. The gas bearing 40 is configured to jet a compressed air toward an outer peripheral surface of the large-diameter cylindrical part 17d of the rotating shaft 12b and to float and support the rotating shaft 12b to the housing 20b in a contactless manner, through supply of the gas from a bearing air supply path 24 formed in the front housing 21 and the rear housing 22. Thereby, the rotating shaft 12b is supported to the housing 20b in the radial direction by the gas bearing 40.

Also, the gas bearing 40 has an axial front end face facing the rear surface of the flange part 16 of the rotating shaft 12b, and is configured to jet the compressed air toward the rear surface of the flange part 16.

The magnet 50 is kept by a magnet yoke 51, and the magnet yoke 51 is screwed and mounted to a magnet mounting part 25 formed at an inner side of the axially extending part 23 of the rear housing 22. In this state, the magnet 50 closely faces the rear surface of the flange part 16.

Therefore, the flange part 16 is attracted rearward by a magnetic force of the magnet 50. In the meantime, the gas bearing 40 is configured to generate a reactive force by jetting the compressed air toward the rear surface (an axial side surface) of the flange part 16, and the rotating shaft 12b is supported to the housing 20b in the thrust direction by the attractive force of the magnet 50 and the reactive force of the gas bearing 40.

The rear housing 22 is formed with a turbine air supply path 26 for supplying a compressed air for operation to the turbine blades 11 and another turbine air supply path 28 for supplying a compressed air for brake to the turbine blades 11, and a nozzle ring 36 having a plurality of nozzles 27, 29 formed therein is mounted to an outer peripheral surface of the axially extending part 23 of the rear housing 22. As shown in FIG. 10, the nozzle ring 36 is formed with a plurality of (in the sixth embodiment, six equally spaced in the circumferential direction) normal rotation nozzles 27 configured to communicate with the turbine air supply path 26 and extending linearly with being inclined in one circumferential direction with respect to the radial direction and a reverse rotation nozzle 29 configured to communicate with the other turbine air supply path 28 and extending linearly with being inclined in the other circumferential direction with respect to the radial direction.

In the meantime, the rear housing 22 is formed with a turbine air exhaust hole 30 for discharging a turbine air and a detection hole 31 for inserting therein a rotation sensor, which holes are penetrated in the axial direction.

Therefore, according to the spindle device 10e configured as described above, in a state where the gas is supplied to the gas bearing 40 and the rotating shaft 12b is thus rotatably supported to the housing 20b, the gas is jetted from the plurality of normal rotation nozzles 27 toward the plurality of turbine blades 11, so that the kinetic energy of the jetted stream is converted into a rotating drive force of the rotating shaft 12b and the rotating shaft 12b is thus rotatively driven.

Here, also in the spindle device 10e of the sixth embodiment, the tapered surface 14 and mounting screw 13 of the workpiece mounting part 15 formed on the inner peripheral surface of the small-diameter cylindrical part 18 overlap the gas bearing 40 in the axial direction, so that it is possible to shorten the axial length of the rotating shaft 12b. Thereby, it is possible to reduce the whirling of the rotating shaft 12b and to increase the resonance frequency of the rotating shaft 12b.

Therefore, since the critical speed of the spindle device 10e exceeds the rotating speed range upon using, it is possible to omit an O-ring that has been provided between the rotating shaft 12b and the housing 20b in the related art.

Also, the spindle device 10e is configured so that the plurality of turbine blades 11 overlaps the gas bearing 40 in the axial direction. Thereby, it is possible to flatten the spindle device 10e, and to implement coating in a narrow space by miniaturization and miniaturization of a robot by weight saving. Also, according to the above configuration, it is possible to reduce a moment load to be applied to the gas bearing 40 as a result of the rotation of the turbine blades 11, as compared to a configuration where the plurality of turbine blades 11 and the gas bearing 40 are axially spaced. Also, the bearing air supply path 24 and the turbine air supply paths 26, 28 are shortened, so that a piping resistance is reduced and a pressure loss in the paths can be thus suppressed.

Also, since the plurality of turbine blades 11 is arranged at the radially inner side with respect to the gas bearing 40, the inertia moment is reduced upon the rotation of the rotating shaft 12b, so that it is possible to reduce the time upon acceleration and deceleration.

Also, the above-described configuration is adopted, so that the bearing air supply path 24 jets the air toward the radially inner side and the normal rotation nozzles 27 and the reverse rotation nozzle 29, which are the turbine nozzles, jet the air toward the radially outer side. Therefore, the bearing air supply path 24 passes a more radially outer side than the turbine air exhaust hole 30 and opens to a rear end face of the rear housing 22, and the turbine air supply paths 26, 28 pass a radially inner side of the turbine air exhaust hole 30 and open to the rear end face of the rear housing 22, so that a degree of freedom of the layout of the paths 24, 26, 28 increases.

The other configurations and operations are the same as the fifth embodiment.

In the meantime, the present invention is not limited to the respective embodiments, and can be appropriately modified and improved.

For example, in the above embodiments, the spindle device of the present invention is used for the electrostatic coater. However, the present invention is not limited thereto and can be applied to a semiconductor manufacturing apparatus (a wafer outer periphery chamfering machine), an edge deburring machine of a product to be machined, and the like.

Also, the configuration where the plurality of turbine blades of the present invention overlaps the gas bearing in the axial direction includes a configuration where at least portions of the plurality of turbine blades overlap in the axial direction. That is, both axial end portions of the plurality of turbine blades may overlap the gas bearing in the axial direction, like the embodiments, or at least portions of the plurality of turbine blades in the axial direction may overlap in the axial direction.

Also, in the embodiments, the rotating shaft 12, 12b is supported in the radial direction and in the thrust direction by the gas bearing and the magnet. However, the rotating shaft 12, 12b may be supported in the radial direction and in the thrust direction by a plurality of gas bearings.

Also, the gas bearing of the present invention is not limited to the configuration where it is configured by a porous member, and may be another static pressure type such as a self-throttling type. However, the gas bearing configured by the porous member can easily secure the rigidity, so that it is possible to secure the sufficient rigidity even when a flow rate of the gas is small.

The subject application is based on Japanese Patent Application Nos. 2015-229995 filed on November 25, 2015, 2015-229996 filed on November 25, 2015 and 2015-229997 filed on November 25, 2015, the contents of which are incorporated herein by reference.

### Description of Reference Numerals

10, 10a, 10b, 10c, 10d, 10e: spindle device
11: turbine blade
12, 12b: rotating shaft
13: mounting screw
14: tapered surface
15: workpiece mounting part
16: flange part
17: cylindrical part
17d: large-diameter cylindrical part
18: small-diameter cylindrical part
20, 20b: housing
40: gas bearing
50: magnet

## Claims

1. A spindle device comprising:
a rotating shaft having a plurality of turbine blades provided in a circumferential direction;
a housing configured to accommodate therein the rotating shaft; and
a gas bearing mounted to the housing and configured to float and support the rotating shaft to the housing in a contactless manner by supply of a gas,
wherein the rotating shaft is configured to be rotatively driven by jetting gas to the plurality of turbine blades, and
wherein the plurality of turbine blades overlaps the gas bearing in an axial direction.

2. The spindle device according to claim 1 further comprising a magnet configured to axially attract a flange part provided to the rotating shaft,
wherein the gas bearing is configured to jet the gas toward a peripheral surface of the rotating shaft facing the gas bearing and an axial side surface of the flange part, and
wherein the rotating shaft is supported to the housing in a radial direction and in a thrust direction by the magnet and the gas bearing.

3. The spindle device according to claim 1, wherein the plurality of turbine blades is arranged at a radially outer side with respect to the gas bearing.

4. The spindle device according to claim 3 further comprising a magnet configured to axially attract a flange part provided to the rotating shaft,
wherein the gas bearing is configured to jet the gas toward an inner peripheral surface of the rotating shaft and an axial side surface of the flange part, and
wherein the rotating shaft is supported to the housing in a radial direction and in a thrust direction by the magnet and the gas bearing.

5. The spindle device according to claim 1, wherein the plurality of turbine blades is arranged at a radially inner side with respect to the gas bearing.

6. The spindle device according to claim 5 further comprising a magnet configured to axially attract a flange part provided to the rotating shaft,
wherein the gas bearing is configured to jet the gas toward an outer peripheral surface of the rotating shaft and an axial side surface of the flange part, and
wherein the rotating shaft is supported to the housing in a radial direction and in a thrust direction by the magnet and the gas bearing.

7. The spindle device according to any one of claims 1 to 6, wherein the gas bearing is supplied with the gas at a plurality of axial positions.

8. A spindle device comprising:
a rotating shaft having a plurality of turbine blades provided in a circumferential direction;
a housing configured to accommodate therein the rotating shaft; and
a gas bearing mounted to the housing and configured to float and support the rotating shaft to the housing in a contactless manner by supply of a gas,
wherein the rotating shaft is configured to be rotatively driven by jetting gas to the plurality of turbine blades,
wherein the rotating shaft has a workpiece mounting part to which a workpiece is to be mounted, and
wherein the workpiece mounting part overlaps the gas bearing in an axial direction.

9. The spindle device according to claim 8,
wherein the rotating shaft has a large-diameter cylindrical part at which the plurality of turbine blades is formed, a small-diameter cylindrical part configuring the workpiece mounting part, and a flange part extending in a radial direction and coupling the large-diameter cylindrical part and the small-diameter cylindrical part, and
wherein the large-diameter cylindrical part and the small-diameter cylindrical part respectively extend in one axial direction with respect to the flange part.

10. The spindle device according to claim 9,
wherein the workpiece mounting part has a tapered surface and a mounting screw which are formed on an inner peripheral surface of the small-diameter cylindrical part.

11. The spindle device according to any one of claims 8 to 10, wherein the plurality of turbine blades is arranged at a radially outer side with respect to the gas bearing and overlaps the gas bearing in the axial direction.

12. The spindle device according to claim 11 further comprising a magnet configured to axially attract a flange part provided to the rotating shaft,
wherein the gas bearing is configured to jet the gas toward an inner peripheral surface of the rotating shaft and an axial side surface of the flange part, and
wherein the rotating shaft is supported to the housing in the radial direction and in a thrust direction by the magnet and the gas bearing.

13. The spindle device according to any one of claims 8 to 10,
wherein the plurality of turbine blades is arranged at a radially inner side with respect to the gas bearing and overlaps the gas bearing in the axial direction.

14. The spindle device according to claim 13 further comprising a magnet configured to axially attract a flange part provided to the rotating shaft,
wherein the gas bearing is configured to jet the gas toward an outer peripheral surface of the rotating shaft and an axial side surface of the flange part, and
wherein the rotating shaft is supported to the housing in the radial direction and in a thrust direction by the magnet and the gas bearing.

15. The spindle device according to any one of claims 8 to 14, wherein the gas bearing is supplied with the gas at a plurality of axial positions.
